# EUROPÄISCHE PATENTSCHRIFT

(11) **EP 1 171 723 B1**
(45) Veröffentlichungstag und Bekanntmachung des Hinweises auf die Patenterteilung: **07.01.2004**
(21) Anmeldenummer: 01913600.1
(22) Anmeldetag: 17.02.2001
(51) Int. Cl.: F16F 9/05

(54) **LUFTFEDERANORDNUNG**
PNEUMATIC SPRING ARRANGEMENT
ENSEMBLE AMORTISSEUR PNEUMATIQUE

(30) Priorität: 28.02.2000 DE 10009236
(43) Veröffentlichungstag der Anmeldung: 16.01.2002
(73) Patentinhaber: Phoenix AG, 21079 Hamburg (DE)
(72) Erfinder: BRANCO, Antonio, 21073 Hamburg (DE); WEBER, Michael, 21244 Buchholz (DE)
(86) Internationale Anmeldenummer: PCT/DE2001/000487
(87) Internationale Veröffentlichungsnummer: WO 2001/065138

(56) Entgegenhaltungen:
- EP-A- 0 295 392
- EP-A- 1 031 756
- US-A- 5 667 203

## Beschreibung

Die Erfindung betrifft eine Luftfederanordnung gemäß Oberbegriff des Patentanspruches 1.

Eine gattungsgemäße Luftfederanordnung mit Luftfederdeckel, Luftfederkolben und Luftfederbalg als wesentliche Bauteile des Luftfedermoduls ist beispielsweise in der Patentschrift DE-C-195 08 980 beschrieben, und zwar unter Verwendung eines Schwingungsdämpfers. Dabei umfasst der Schwingungsdämpfer ein Behälterrohr, das zumindest abschnittsweise vom Luftfederkolben umgeben ist, und eine Kolbenstange, die fest mit dem Kernbereich des Luftfederdeckels verbunden ist und gleitend in das Behälterrohr eintaucht. Der Schwingungsdämpfer ist zudem zumeist mit einem Dämpferlager ausgestattet.

Im folgenden wird nun der Luftfederkolben konstruktiv näher vorgestellt. Der Luftfederkolben weist einen Stirnbereich auf, der dem Luftfederdeckel mit dem ersten Befestigungsbereich für das eine Ende des Luftfederbalges gegenüberliegend angeordnet ist. An diesen Stirnbereich schließt sich der zweite Befestigungsbereich für das andere Ende des Luftfederbalges an. Dieser Befestigungsbereich ist mit einer Hinterschneidung unter Bildung einer Schulter versehen. Ein weiteres Teil des Luftfederkolbens bildet die seitliche Abrollfläche, an der der Luftfederbalg unter Bildung einer Schlaufe abrollen kann.

In der vorangemeldeten und nachveröffentlichten EP-A-1 031 756 erfolgt die Befestigung des Luftfederbalges am Luftfederkolben derart, dass außer dem üblichen Klemmring noch ein zusätzliches Stützelement verwendet wird, und zwar in Form eines zweiten Klemmringes, einer Buchse mit Kragen oder einer entsprechenden Balgausbildung innerhalb des Befestigungsbereiches.

Die Aufgabe der Erfindung besteht nun darin, für eine gattungsgemäße Luftfederanordnung die Befestigung des Luftfederbalges am Luftfederkolben unter Einbezug der Dämpfungseinrichtung so zu sichern, dass bei einer leichten Montierbarkeit eine hohe Abreißkraft gewährleistet ist.

Gelöst wird diese Aufgabe gemäß Kennzeichen des Patentanspruches 1 dadurch, dass innerhalb des Stirnbereiches und des zweiten Befestigungsbereiches des Luftfederkolbens ein Klemmverschluss angeordnet ist, der wenigstens aus einem äußeren Ringkörper und einem inneren Ringkörper besteht, die zwei Einzelbauteile sind, die zusammensteckbar sind, wobei
- der äußere Ringkörper als einstückiger Verbundkörper einen Kragen zur umgreifenden Aufnahme des zweiten Befestigungsbereiches und wenigstens einen in axialer Richtung verlaufenden Federarm mit einem ersten Widerhaken aufweist; und
- der innere Ringkörper als ebenfalls einstückiger Verbundkörper einen Außenring und einen Innenring umfasst, wobei der Außenring mit wenigstens einem radial nach außen gerichteten zweiten Widerhaken versehen ist, der die Schulter des Luftfederkolbens abstützend umgreift, wobei zudem der Innenring zur zentrischen Aufnahme des Behälterrohres dient, wobei zudem der Außenring und Innenring so miteinander verbunden sind, dass wenigstens ein Steckfenster zur einrastenden Aufnahme des ersten Widerhakens vorhanden ist.

Zweckmäßige Ausgestaltungen der Erfindung sind in den Patentansprüchen 2 bis 14 genannt.

Die Erfindung wird nun anhand eines Ausführungsbeispieles unter Bezugnahme auf zwei schematische Zeichnungen erläutert. Es zeigen:
- Fig. 1: eine Luftfederanordnung gemäß dem Stand der Technik;
- Fig. 2: eine Detaildarstellung des Klemmverschlusses.

In Verbindung mit diesen Figuren gilt folgende Bezugsziffernliste:
- **1**: Luftfederanordnung
- **2**: Luftfederbalg
- **3**: Luftkammer
- **4**: Luftfederdeckel (Luftfedertopf, Druckbehälter)
- **5**: erster Befestigungsbereich
- **6**: Klemmring
- **7**: Luftfederkolben (Abrollkolben, Tauchkolben)
- **8**: Stirnbereich
- **9**: zweiter Befestigungsbereich
- **10**: Klemmring
- **11**: Hinterschneidung mit Schulter
- **12**: Abrollfläche
- **13**: Schlaufe (Rollfalte)
- **14**: Schwingungsdämpfer (Stoßdämpfer)
- **15**: Behälterrohr
- **16**: Kolbenstange
- **17**: Klemmverschluss
- **18**: äußerer Ringkörper
- **19**: Kragen
- **20**: Federarm
- **21**: erster Widerhaken
- **22**: innerer Ringkörper
- **23**: Außenring
- **24**: Innenring
- **25**: zweiter Widerhaken
- **26**: Aufnahmeraum für den zweiten Befestigungsbereich
- **27**: zentrischer Aufnahmeraum für das Behälterrohr
- **28**: Steckfenster
- **29**: Halterippen

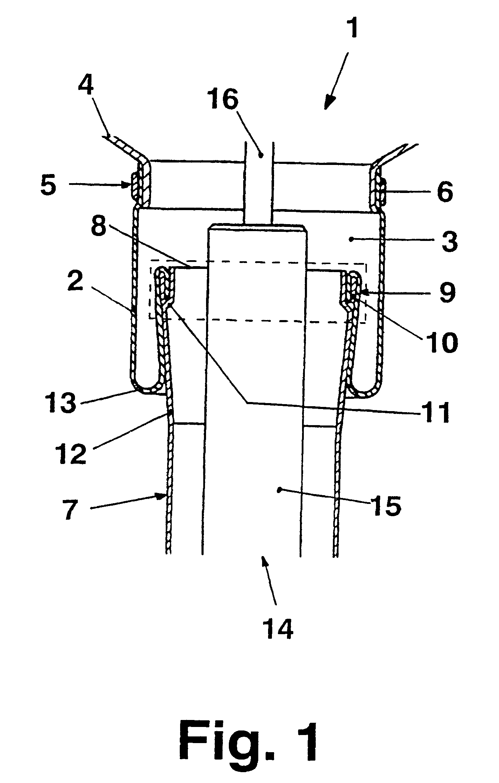

Fig. 1 zeigt ausschnittsweise eine Luftfederanordnung **1**, wobei der Luftfederbalg **2** aus elastomerem Werkstoff eine volumenelastische Luftkammer **3** einschließt. Der Luftfederbalg ist dabei zumeist mit einem eingebetteten Festigkeitsträger in Form eines Axialbalges oder Kreuzlagenbalges versehen.

Der Luftfederdeckel **4**, der üblicherweise topfförmig ausgebildet ist und zudem häufig als Druckbehälter dient, weist einen ersten Befestigungsbereich **5** auf, an dem das eine Ende des Luftfederbalges **2** mittels eines Klemmringes **6** befestigt ist.

Der Luftfederkolben **7** als rohrförmiges Bauteil umfasst einen Stirnbereich **8**, der dem Luftfederdeckel **4** gegenüberliegend angeordnet ist. Hieran schließt sich seitlich der zweite Befestigungsbereich **9** für das andere Ende des Luftfederbalges **2** an. Die Befestigung erfolgt auch hier mittels eines Klemmringes **10**, wobei das Balgende den Klemmring umbördelt. Dieser Befestigungsbereich ist mit einer Hinterschneidung unter Bildung einer Schulter **11** versehen. Beim Einfedern des Luftfederbalges **2** entsteht ferner eine Schlaufe **13**, die an der Abrollfläche **12** des Luftfederkolbens abrollen kann.

Die Luftfederanordnung **1** besteht zudem aus einem Schwingungsdämpfer **14**, der ein Behälterrohr **15,** das zumindest abschnittsweise vom Luftfederkolben **7** umgeben ist, und eine Kolbenstange **16** umfasst. Die Kolbenstange ist dabei fest mit dem Kernbereich des Luftfederdeckels **4** befestigt, insbesondere in Verbindung mit einem Dämpferlager, und taucht gleitend in das Behälterrohr ein. Eine derartige Luftfederanordnung wird auch als Luftfederbein bezeichnet, wobei hinsichtlich der konstruktiven Details auf die eingangs genannte Patentschrift DE-C-195 08 980 verwiesen wird.

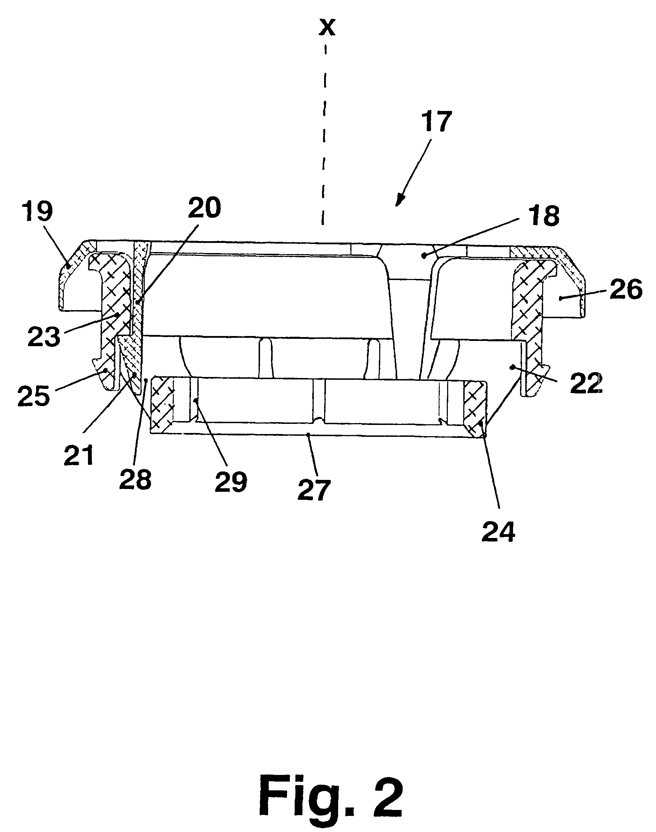

Der in der Fig. 1 umrissene punktierte Bereich, der nun den neuartigen Klemmverschluss umfasst, wird nun in Verbindung mit der Fig. 2 näher beschrieben.

Nach Fig. 2 besteht der Klemmverschluss **17** aus einem äußeren Ringkörper **18** und einem inneren Ringkörper **22**, die fertigungstechnisch zwei Einzelbauteile sind, die zusammensteckbar sind. Diese beiden Ringkörper bestehen wiederum insbesondere aus Kunststoff und sind jeweils einstückig ausgebildet.

Der äußere Ringkörper **18** weist einen ringförmigen Kragen **19** sowie wenigstens einen in axialer Richtung **X** verlaufenden Federarm **20**, insbesondere zwei bis sechs Federarme, auf. Jeder Federarm ist dabei mit einem ersten Widerhaken **21** versehen, der radial nach außen gerichtet ist.

Der innere Ringkörper **22** umfasst einen Außenring **23** und Innenring **24**, wobei der Außenring mit wenigstens einem radial nach außen gerichteten zweiten Widerhaken **25**, insbesondere zwei bis sechs Widerhaken, versehen ist. Der Innenring weist einen zentrischen (zylindrischen) Aufnahmeraum **27** für das Behälterrohr **15** des Schwingungsdämpfers **14** auf (Fig. 1), insbesondere in Verbindung mit mehreren Halterippen **29**.

Zwischen dem Kragen **19** des äußeren Ringkörpers **18** und dem Außenring **23** des inneren Ringkörpers **22** befindet sich ein Aufnahmeraum **26** für den zweiten Befestigungsbereich **9,** wobei der zweite Widerhaken **25** des Außenringes **23** die Schulter **11** des Luftfederkolbens **7** abstützend umgreift (Fig. 1).

Der Außenring **23** und der Innenring **24** des inneren Ringkörpers **22** sind nun so miteinander verbunden, dass wenigstens ein Steckfenster **28**, insbesondere zwei bis sechs Steckfenster, zur einrastenden Aufnahme des ersten Widerhakens **21** des äußeren Ringkörpers **18** vorhanden ist/sind. Der Widerhaken **21** umgreift dabei den Außenring **23** des inneren Ringkörpers **22**.

Die Federarme **20** mit dem ersten Widerhaken **21**, die Steckfenster **28** sowie die zweiten Widerhaken **25** sind jeweils in Umfangsrichtung im gleichen Abstand zueinander angeordnet.

## Patentansprüche

1. Luftfederanordnung (1), bestehend aus wenigstens folgenden Bauteilen, nämlich:
- einem Luftfederbalg (2) aus elastomerem Werkstoff, der eine volumenelastische Luftkammer (3) einschließt;
- einem Luftfederdeckel (4) mit einem ersten Befestigungsbereich (5), an dem das eine Ende des Luftfederbalges (2) mittels eines Klemmringes (6) oder dergleichen befestigt ist;
- einem Luftfederkolben (7), umfassend
• einen Stirnbereich (8), der dem Luftfederdeckel (4) gegenüberliegend angeordnet ist;
• einen zweiten Befestigungsbereich (9), an dem das andere Ende des Luftfederbalges ebenfalls mittels eines Klemmringes (10) oder dergleichen befestigt ist und der eine Hinterschneidung unter Bildung einer Schulter (11) aufweist; und
• eine seitliche Abrollfläche (12), an der der Luftfederbalg (2) unter Bildung einer Schlaufe (13) abrollen kann;
- einem Schwingungsdämpfer (14), umfassend
• ein Behälterrohr (15), das zumindest abschnittsweise vom Luftfederkolben (7) umgeben ist; sowie
• eine Kolbenstange (16), die mit dem Luftfederdeckel (4) in Verbindung steht und gleitend in das Behälterrohr (15) eintaucht;
**dadurch gekennzeichnet, dass**
- innerhalb des Stirnbereiches (8) und des zweiten Befestigungsbereiches (9) des Luftfederkolbens (7) ein Klemmverschluss (17) angeordnet ist, der wenigstens aus einem äußeren Ringkörper (18) und einem inneren Ringkörper (22) besteht, die zwei Einzelbauteile sind, die zusammensteckbar sind, wobei
• der äußere Ringkörper (18) als einstückiger Verbundkörper einen Kragen (19) zur umgreifenden Aufnahme des zweiten Befestigungsbereiches (9) und wenigstens einen in axialer Richtung (X) verlaufenden Federarm (20) mit einem ersten Widerhaken (21) aufweist; und
• der innere Ringkörper (22) als ebenfalls einstückiger Verbundkörper einen Außenring (23) und einen Innenring (24) umfasst, wobei der Außenring mit wenigstens einem radial nach außen gerichteten zweiten Widerhaken (25) versehen ist, der die Schulter (11) des Luftfederkolbens (7) abstützend umgreift, wobei ferner der Innenring (24) zur zentrischen Aufnahme des Behälterrohres (15) dient, wobei zudem der Außenring (23) und Innenring (24) so miteinander verbunden sind, dass wenigstens ein Steckfenster (28) zur einrastenden Aufnahme des ersten Widerhakens (21) vorhanden ist.

2. Luftfederanordnung nach Anspruch 1, **dadurch gekennzeichnet, dass** der äußere Ringkörper (18) in Umfangsrichtung zwei bis sechs Federarme (20) mit jeweils einem ersten Widerhaken (21) aufweist.

3. Luftfederanordnung nach Anspruch 2, **dadurch gekennzeichnet, dass** drei Federarme (20) vorhanden sind.

4. Luftfederanordnung nach Anspruch 2 oder 3, **dadurch gekennzeichnet, dass** die Federarme (20) im gleichen Abstand zueinander angeordnet sind.

5. Luftfederanordnung nach einem der Ansprüche 1 bis 4, **dadurch gekennzeichnet, dass** der erste Widerhaken (21) radial nach außen gerichtet ist.

6. Luftfederanordnung nach einem der Ansprüche 1 bis 5, **dadurch gekennzeichnet, dass** der innere Ringkörper (22) in Umfangsrichtung zwei bis sechs Steckfenster (28) aufweist.

7. Luftfederanordnung nach Anspruch 6, **dadurch gekennzeichnet, dass** sechs Steckfenster (28) vorhanden sind.

8. Luftfederanordnung nach Anspruch 6 oder 7, **dadurch gekennzeichnet, dass** die Steckfenster (28) im gleichen Abstand zueinander angeordnet sind.

9. Luftfederanordnung nach einem der Ansprüche 1 bis 8, **dadurch gekennzeichnet, dass** in Umfangsrichtung zwei bis sechs zweite Widerhaken (25) vorhanden sind.

10. Luftfederanordnung nach Anspruch 9, **dadurch gekennzeichnet, dass** sechs zweite Widerhaken (25) vorhanden sind.

11. Luftfederanordnung nach Anspruch 9 oder 10, **dadurch gekennzeichnet, dass** die zweiten Widerhaken (25) im gleichen Abstand zueinander angeordnet sind.

12. Luftfederanordnung nach einem der Ansprüche 1 bis 11, **dadurch gekennzeichnet, dass** der äußere Ringkörper (18) und der innere Ringkörper (22) jeweils aus Kunststoff bestehen.

13. Luftfederanordnung nach einem der Ansprüche 1 bis 12, **dadurch gekennzeichnet, dass** der Innenring (24) innenseitig mehrere Halterippen (29) aufweist, die vorzugsweise in Umfangsrichtung im gleichen Abstand zueinander angeordnet sind.

14. Luftfederanordnung nach einem der Ansprüche 1 bis 13, **dadurch gekennzeichnet, dass** der Kragen (19) ringförmig ausgebildet ist.

## Claims

1. Air spring arrangement (1) consisting of at least the following components, namely:
- an air spring bellows (2) made of elastomer material which encloses an air chamber (3) of elastic volume,
- an air spring cover (4) with a first fastening area (5) to which one end of the air spring bellows (2) is fastened by means of a clamping ring (6) or the like,
- an air spring piston (7) comprising
• an end area (8) which is arranged opposite the air spring cover (4),
• a second fastening area (9) to which the other end of the air spring bellows is fastened again by means of a clamping ring (10) or the like and which exhibits an undercut forming a shoulder (11), and
• a lateral rolling surface (12) on which the air spring bellows (2) can roll forming a loop (13),
- a vibration damper (14) comprising
• a container tube (15) which is at least partly surrounded by the air spring piston (7), and
• a piston rod (16) which is connected to the air spring cover (4) and engages slidingly in the container tube (15),
**characterised in that**
- arranged inside the end area (8) and the second fastening area (9) of the air spring piston (7) there is a clamping closure (17) which consists at least of one outer annular body (18) and one inner annular body (22) which are two individual components which can be assembled together, whereby
• the outer annular body (18) as a one-piece composite body exhibits a collar (19) for embracing reception of the second fastening area (9) and at least one spring arm (20) running in the axial direction (X) with a first barb (21), and
• the inner annular body (22) also as a one-piece composite body comprises an outer ring (23) and an inner ring (24), whereby the outer ring is provided with at least one second barb (25) which is directed radially outwards and embraces and supports the shoulder (11) of the air spring piston (7), whereby further the inner ring (24) serves for central reception of the container tube (15), whereby in addition the outer ring (23) and inner ring (24) are connected to one another so that at least one engagement window (28) is present for locking reception of the first barb (21).

2. Air spring arrangement according to claim 1, **characterised in that** the outer annular body (18) in the circumferential direction exhibits two to six spring arms (20) each with a first barb (21).

3. Air spring arrangement according to claim 2, **characterised in that** three spring arms (20) are present.

4. Air spring arrangement according to claim 2 or 3, **characterised in that** the spring arms (20) are arranged equidistant from one another.

5. Air spring arrangement according to one of claims 1 to 4, **characterised in that** the first barb (21) is directed radially outwards.

6. Air spring arrangement according to one of claims 1 to 5, **characterised in that** the inner annular body (22) in the circumferential direction exhibits two to six engagement windows (28).

7. Air spring arrangement according to claim 6, **characterised in that** six engagement windows (28) are present.

8. Air spring arrangement according to claim 6 or 7, **characterised in that** the engagement windows (28) are arranged equidistant from one another.

9. Air spring arrangement according to one of claims 1 to 8, **characterised in that** two to six second barbs (25) are present in the circumferential direction.

10. Air spring arrangement according to claim 9, **characterised in that** six second barbs (25) are present.

11. Air spring arrangement according to claim 9 or 10, **characterised in that** the second barbs (25) are arranged equidistant from one another.

12. Air spring arrangement according to one of claims 1 to 11, **characterised in that** the outer annular body (18) and the inner annular body (22) are each made of plastic.

13. Air spring arrangement according to one of claims 1 to 12, **characterised in that** on the inside the inner ring (24) exhibits a plurality of retaining ribs (29) which are preferably arranged equidistant from one another in the circumferential direction.

14. Air spring arrangement according to one of claims 1 to 13, **characterised in that** the collar (19) is annular in shape.

## Revendications

1. Ensemble amortisseur pneumatique (1), formé d'au moins les composants suivants, précisément :
- un soufflet de ressort pneumatique (2) en matériau élastomère, incluant une chambre à air (3) à capacité volumique élastique;
- un couvercle de ressort pneumatique (4), avec une première zone de fixation (5) sur laquelle est fixée une extrémité du soufflet de ressort pneumatique (2), à l'aide d'une bague de serrage (6) ou analogue;
- un piston de ressort pneumatique (7) comprenant
• une zone frontale (8), disposée à l'opposé du couvercle de ressort pneumatique (4);
• une deuxième zone de fixation (9) sur laquelle l'autre extrémité du soufflet de ressort pneumatique est fixée, également à l'aide d'une bague de serrage (10) ou analogue, et qui présente une contredépouille avec formation d'un épaulement (11); et
• une surface de roulement (12) latérale, sur laquelle le soufflet de ressort pneumatique (2) peut rouler en formant une boucle (13);
- un amortisseur de vibrations (14), comprenant :
• un tube de récipient (15), entouré, au moins par tronçons, par le piston de ressort pneumatique (7); et
• une tige de piston (16), reliée au couvercle de ressort pneumatique (4) et plongeant, avec glissement, dans le tube de récipient (15);
**caractérisé en ce qu'**
- à l'intérieur de la zone frontale (8) et de la deuxième zone de fixation (9) du piston de ressort pneumatique (7) est disposée une fermeture à serrage (17), composée au moins d'un corps annulaire extérieur (18) et d'un corps annulaire intérieur (22), qui sont deux composants individuels, pouvant être assemblés l'un dans l'autre par emboîtement, sachant que :
• le corps annulaire extérieur (18), réalisé sous la forme de corps composite monobloc, présente une collerette (19) pour loger, en l'entourant, la deuxième zone de fixation (9) et au moins un bras élastique (20) s'étendant en direction axiale (X), avec un premier contre-crochet (21); et
• le corps annulaire intérieur (22), réalisé également sous forme de corps composite monobloc, comprend une bague extérieure (23) et une bague intérieure (24), la bague extérieure (21) étant munie d'au moins un deuxième contre-crochet (25), orienté radialement vers l'extérieur, contre-crochet entourant, avec fonction de soutien, l'épaulement (11) du piston de ressort pneumatique (7), en outre la bague intérieure (24) servant à loger de façon centrée, le tube de récipient (15), où, de plus, la bague extérieure (23) et la bague intérieure (24) sont reliées ensemble, de manière qu'au moins une fenêtre d'emboîtement (28) soit créée, pour loger avec encliquetage le premier contre-crochet (21).

2. Ensemble amortisseur pneumatique selon la revendication 1, **caractérisé en ce que** le corps annulaire extérieur (18) présente, en direction périphérique, de deux à six bras élastiques (20) ayant chacun un premier contre-crochet (21).

3. Ensemble amortisseur pneumatique selon la revendication 2, **caractérisé en ce que** sont prévus trois bras élastiques (20).

4. Ensemble amortisseur pneumatique selon la revendication 2 ou 3, **caractérisé en ce que** les bras élastiques (20) sont disposés sous le même espacement mutuel.

5. Ensemble amortisseur pneumatique selon l'une des revendications 1 à 4, **caractérisé en ce que** le premier contre-crochet (21) est orienté radialement vers l'extérieur.

6. Ensemble amortisseur pneumatique selon l'une des revendications 1 à 5, **caractérisé en ce que** le corps annulaire intérieur (22) présente, en direction périphérique, de deux à six fenêtres d'emboîtement (28).

7. Ensemble amortisseur pneumatique selon la revendication 6, **caractérisé en ce que** sont prévues six fenêtres d'emboîtement (28).

8. Ensemble amortisseur pneumatique selon la revendication 6 ou 7, **caractérisé en ce que** les fenêtres d'emboîtement (28) sont disposées sous le même espacement mutuel.

9. Ensemble amortisseur pneumatique selon l'une des revendications 1 à 8, **caractérisé en ce que** de deux à six deuxième contre-crochets (25) sont prévus en direction périphérique.

10. Ensemble amortisseur pneumatique selon la revendication 9, **caractérisé en ce que** six deuxièmes contre-crochets (25) sont prévus.

11. Ensemble amortisseur pneumatique selon la revendication 9 ou 10, **caractérisé en ce que** les deuxièmes contre-crochets (25) sont disposés sous le même espacement mutuel.

12. Ensemble amortisseur pneumatique selon l'une des revendications 1 à 11, **caractérisé en ce que** le corps annulaire extérieur (18) et le corps annulaire intérieur (22) sont chacun formés de matière synthétique.

13. Ensemble amortisseur pneumatique selon l'une des revendications 1 à 12, **caractérisé en ce que** la bague intérieure (24) présente, intérieurement, une pluralité de nervures de maintien (29), disposées, de préférence, sous un espacement mutuel identique en direction périphérique.

14. Ensemble amortisseur pneumatique selon l'une des revendications 1 à 13, **caractérisé en ce que** la collerette (19) est de forme annulaire.
